# EUROPEAN PATENT SPECIFICATION

(11) **EP 2 108 862 B1**
(45) Date of publication and mention of the grant of the patent: **28.09.2011**
(21) Application number: 09157591.0
(22) Date of filing: 08.04.2009
(51) Int. Cl.: F16H 57/02

(54) **Gear case and gear shaft mounting method**
Getriebegehäuse und Montierverfahren für Gangschaltung
Boîte de vitesses et procédé de montage d'arbre de transmission

(30) Priority: 08.04.2008 JP 2008100607
(43) Date of publication of application: 14.10.2009
(73) Proprietor: Toyota Jidosha Kabushiki Kaisha, Toyota-shi, Aichi-ken, 471-8571 (JP)
(72) Inventor: Abiru, Yuji, Toyota-shi Aichi 471-8571 (JP)
(74) Representative: TBK

(56) References cited:
- JP-A- 2006 183 739
- JP-A- 2006 275 157

## Description

### BACKGROUND OF THE INVENTION

### 1. Field of the Invention

The invention relates to a gear case in which a gear shaft end supporting portion that is surrounded by a ring-shaped stepped portion is formed in the surface of a partition wall in order to support a gear shaft. The invention also relates to method for mounting a gear shaft to the gear case.

### 2. Description of the Related Art

Japanese Patent Application Publication No. 2006-183739 (JP-A-2006-183739), for example, describes technology in which a reverse idler shaft used for traveling in reverse is provided separate from an input shaft and a counter shaft in a gear case of a transmission, for example.

The reverse idler shaft is supported by a shaft end supporting portion such as a shaft through-hole or a recessed shaft hole formed in a partition wall in the gear case. However, for convenience in the assembly process, the counter shaft and the input shaft which support multiple large diameter gears may already be mounted when the reverse idler shaft is to be mounted.

With the technology described in JP-A-2006-183739, a reverse lever is made to engage with an annular groove of a reverse idler gear by being guided by a rib after the reverse idler shaft and the reverse idler gear have been arranged in a shaft supporting portion. This structure uses the rib to help engage the reverse lever in a non-visible location because a worker is unable to visually confirm the engagement of the reverse lever with the annular groove which is located on the back side of the reverse idle gear.

However, when mounting the reverse idler gear itself in the shaft end supporting portion, other members such as the input shaft and the counter shaft may make it difficult to mount the reverse idler gear from the axial direction, as described above. That is, the large diameter of the gears that are mounted to the intake shaft and the counter shaft make it difficult to move the reverse idler shaft vertically toward the partition wall in order to mount it in the shaft end supporting portion. Therefore, to mount the reverse idler shaft, the worker first temporarily rests one end of the reverse idler shaft on the surface of the partition wall, then slides the shaft, and finally lifts it up off of the surface of the partition wall and move it over the ring-shaped stepped portion surrounding the shaft end supporting portion to insert the end of the shaft into the shaft end supporting portion. In this way, mountability is poor. JP-A-2006-183739 does not describe a method for resolving this kind of difficulty in mounting the reverse idler gear itself.

### SUMMARY OF THE INVENTION

It is thus an object of the invention to improve the mountability of a gear shaft to a gear case by eliminating the work of lifting an end of a shaft up off of the surface of a partition wall to insert it into a shaft end supporting portion.

Therefore, a first embodiment of the invention relates to a gear case disclosing the features of claim 1 a gear shaft end supporting portion that is surrounded by a ring-shaped portion is

Forming the guide surface that guides the end of the gear shaft to the top surface of the ring-shaped stepped portion on the surface of the partition wall in this way enables the end of the gear shaft to easily reach the top surface of the ring-shaped stepped portion simply by sliding the end of the gear shaft on the guide surface, such that the end of the gear shaft can be easily inserted into the supporting portion. As a result, it is no longer necessary to lift the shaft end up off of the surface of the partition wall, so mountability of the gear shaft onto the gear case can be improved.

In the gear case according to the first embodiment described above, a stepped edge portion may be formed on the outer periphery of the partition wall, and a top surface of the stepped edge portion and the top surface of the ring-shaped stepped portion may be connected by the guide surface.

Accordingly, the end of the gear shaft is able to easily reach the top surface of the ring-shaped stepped portion, without having to be lifted up off of the surface of the partition wall, simply by being slid after first being rested on the stepped edge portion of the partition wall or after first being rested on the guide surface. As a result, the shaft end can easily be inserted into the shaft end supporting portion.

In one of the structures described above, a gap that has a width narrower than the width of the end of the gear shaft may be formed between the stepped edge portion and the guide surface.

Even if there is a gap having a narrower width than the width of the end of the gear shaft in this way, the shaft end will still be able to slide without a problem, without falling into the gap. Moreover, if a seal such as a liquid seal is arranged on the slopped edge portion of the partition wall and the stepped edge portion is connected to the guide surface, the shape of the seal may be discontinuous at the area where the stepped edge portion is connected to the guide surface. However, providing the gap between the stepped edge portion and the guide surface enables the continuity of the seal shape to be maintained. As a result, a more complete seal is able to be maintained.

In the gear case according to first embodiment described above, a stepped edge portion may be formed on the outer periphery of the partition wall, and the plurality of guide surfaces are formed on the surface of the partition wall between a top surface of the stepped edge portion and the top surface of the ring-shaped stepped portion. Also, a gap between the plurality of guide surfaces that are adjacent to one another, or a gap between the guide surface and the stepped edge portion, or a gap between the guide surface and the ring-shaped stepped portion, may be narrower than the width of the end of the gear shaft.

Having the gaps between the guide surfaces that are arranged like stepping stones be narrower than the width of the end of the gear shaft in this way will not impede the ability of the shaft end to slide without dropping onto the partition wall surface between guide surfaces. Therefore, the end of the gear shaft is able to easily reach the top surface of the ring-shaped stepped portion by simply sliding the end of the gear shaft on the guide surfaces, thereby making it easier to insert the shaft end into the shaft end supporting portion. As a result, it is no longer necessary to lift the shaft end sup off of the surface of the partition wall to insert it into the shaft end supporting portion, so mountability of the gear shaft to the gear case can be improved.

In the gear case according to the first embodiment described above, the guide surface may guide the end of the gear shaft from a position lower than the top surface of the ring-shape stepped portion to the top surface of the ring-shaped stepped portion by gradually rising from the surface of the partition wall.

In this case, even if the shaft end is temporarily placed in a position lower than the top surface of the ring-shaped stepped portion, such as on the partition wall surface, the shaft end is still able to reach the ring-shaped stepped portion by gradually rising on its own by sliding along the guide surface, which enables the shaft end to easily be inserted into the shaft end supporting portion.

In one of the structures described above, the gear case may be a gear case of a transmission. Applying the invention to a gear case of a transmission in this way makes it possible to efficiently assemble the gears of the transmission.

Also, the gear shaft may be a gear shaft of a reverse idler gear. applying the invention to assembling the gear shaft of a reverse idler gear in this way makes it possible to efficiently assemble the gear shaft of the reverse idler gear of the transmission in a gear case of a transmission.

Accordingly, movement of the gear shaft and the gear to which the shift fork is attached can be restricted on the guide surface via the shift fork, the end of the shaft of which is supported by the shift fork shaft end supporting portion. Therefore, the gear shaft can be more stably guided. Accordingly, the gear shaft is able to reach the top surface of the ring-shaped stepped portion and be inserted into the shaft end supporting portion with extreme ease and accuracy.

A second embodiment of the invention relates to a gear shaft mounting method for mounting the gear shaft to the gear case having one of the structures described above. The gear shaft mounting method includes guiding the end of the gear shaft supporting the gear to the top surface of the ring-shaped stepped portion while sliding the end of the gear shaft on the guide surface of the gear case, and inserting the shaft end into the gear shaft end supporting portion.

Accordingly, only sliding the end of the gear shaft on the guide surface causes the end of the gear shaft to easily reach the top portion of the ring-shaped stepped portion. From this state, the shaft end is easily inserted into the shaft end supporting portion. As a result, it is no longer necessary to lift the shaft end up off of the surface of the partition wall to insert it into the shaft end supporting portion, so mountability of the gear shaft to the gear case may be improved.

A third embodiment of the invention relates to a gear shaft mounting method in which the shift fork attached to the gear supported on the gear shaft is supported by the shift fork shaft end supporting portion of the gear case having the structure described above, and the end of the gear shaft is guided to the top surface of the ring-shaped stepped portion by both the shift fork and the arc-shaped guide surface, and then inserted into the gear shaft end supporting portion.

Guiding the end of the gear shaft using both the shift fork and the guide surface in this way makes it possible to more stably guide the shaft end, such that the gear shaft is able to reach the top surface of the ring-shaped stepped portion and be inserted into the shaft end supporting portion with extreme ease and accuracy.

In the second or third embodiment described above, the end of the gear shaft supporting the gear may first be rested on a stepped edge portion of the partition wall and then slid toward the guide surface on the partition wall and guided on the guide surface.

Also, the gear shaft may be mounted after another gear shaft has already been mounted in the gear case.

When mounting a gear shaft particularly after another gear shaft has already been mounted in this way, it is difficult to mount the gear shaft from the axial direction, and in addition, it is difficult to see the ring-shaped stepped portion and the shaft end supporting portion. Therefore, a mounting method such as one of those in the aspects of the invention described above is extremely effective for improving workability.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a plan view of a gear case according to a first example embodiment of the invention;
FIG. 2 is a perspective view of the main portions of the gear case according to the first example embodiment of the invention;
FIG 3 is a plan view of the gear case with shafts mounted to it;
FIG 4 is a perspective view of the main portions of the gear case with the shafts mounted to it;
FIG 5 is a first view illustrating the process of mounting a reverse shaft in the first example embodiment;
FIG. 6 is second view illustrating the process of mounting the reverse shaft;
FIG 7 is third view illustrating the process of mounting the reverse shaft;
FIG. 8 is a fourth view illustrating the process of mounting the reverse shaft;
FIG 9 is a partial sectional view of the fourth view illustrating the process of mounting the reverse shaft;
FIG 10 is a fifth view illustrating the process of mounting the reverse shaft;
FIG 11 is a plan view of the main portions of a gear case according to a second example embodiment of the invention;
FIG. 12 is a perspective view of the main portions of the gear case according to a second example embodiment of the invention;
FIG 13 is a view illustrating the process of mounting a reverse shaft according to the second example embodiment;
FIG. 14 is a plan view of the main portions of a gear case according to a third example embodiment of the invention;
FIG 15 is a perspective view of the main portions of the gear case according to the third example embodiment;
FIG 16 is a view illustrating the process of mounting a reverse shaft in the third example embodiment;
FIG 17 is a perspective view of the main portions of a gear case according to a fourth example embodiment of the invention;

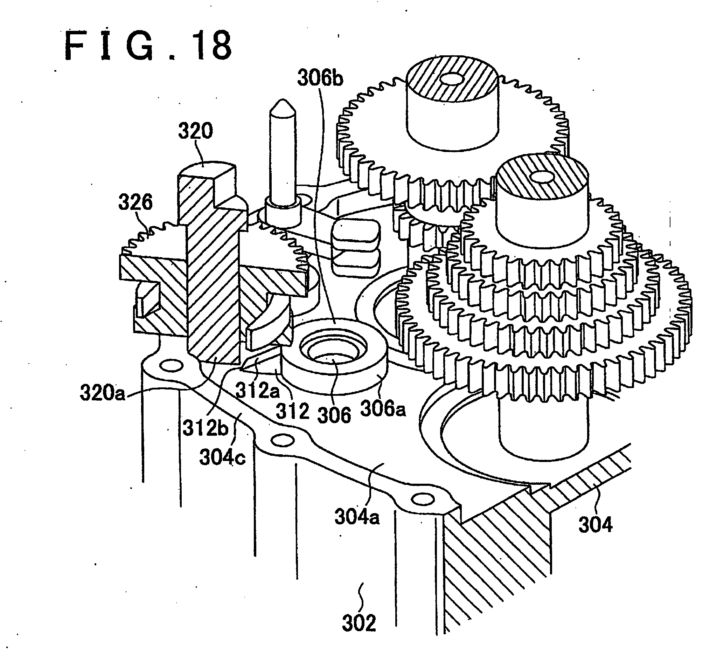

FIG 18 is a view illustrating the process of mounting a reverse shaft in the fourth example embodiment; and
FIG 19 is a plan view of a gear case according to another example embodiment.

### DETAILED DESCRIPTION OF EMBODIMENTS

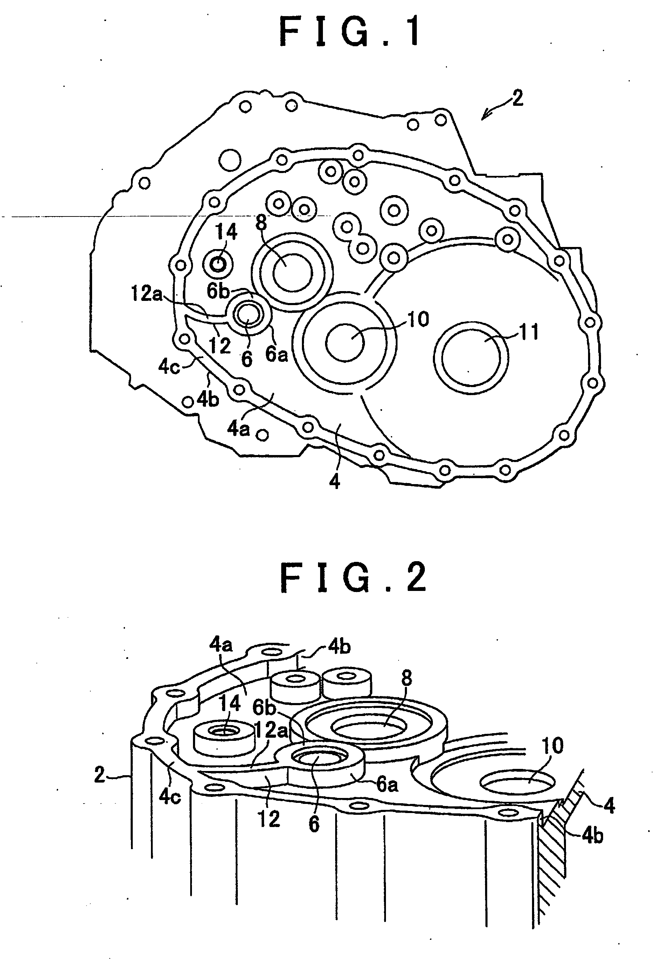

FIG 1 is a plan view, as viewed from the partition wall 4 side, of a transaxle case 2 which is part of a gear case of a transmission according to a first example embodiment of the invention. A reverse shaft hole 6 (which functions as a gear shaft end supporting portion) for supporting a reverse shaft, an input shaft hole 8 for supporting an input shaft, a counter shaft hole 10 for supporting a counter shaft, and a shaft hole 11 for supporting a final gear shaft of a differential unit, and the like are formed in the partition wall 4.

As shown in the perspective view of the main portions of the gear case according to the first example embodiment of the invention in FIG. 2, a ring-shaped stepped portion 6a is provided around the reverse shaft hole 6 that opens into the surface 4a of the partition wall 4. A stepped-shape edge portion 4b is formed around the outer periphery of the entire partition wall 4. The stepped-shaped portion 4b is fastened to a transmission case which is part of the gear case of the transmission. Incidentally, in the perspective views, including FIG. 2, the height of the step of each portion from the surface 4a of the partition wall 4 is exaggerated to facilitate understanding. This is also true for the other example embodiments.

A guide portion 12 that connects the ring-shaped stepped portion 6a with the stepped edge portion 4b is provided between those portions 6a and 4b. A guide top surface 12a (functioning as the guide surface) of the guide portion 12 smoothly, i.e., steplessly, connects the top surface 6a of the ring-shaped stepped portion 6a with the top portion 4c of the stepped edge portion 4b. Furthermore, when viewed from above, the top surface 12a is formed in an arc shape centered around a shift shaft hole 14 for supporting a shift fork shaft to which a reverse shift fork is mounted.

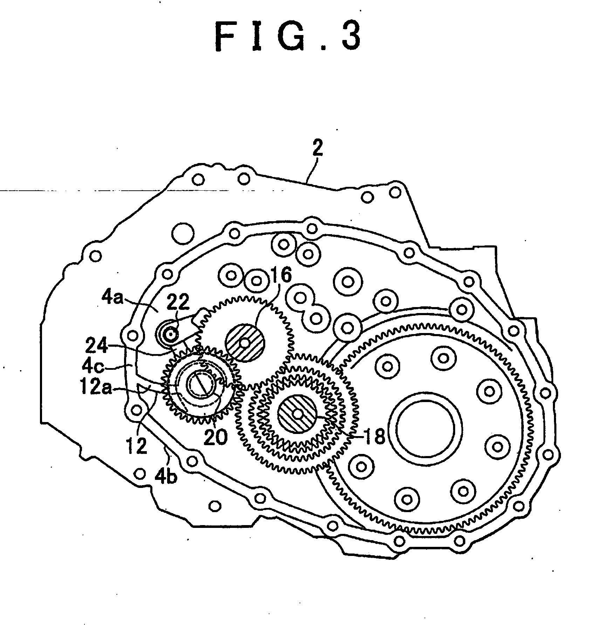

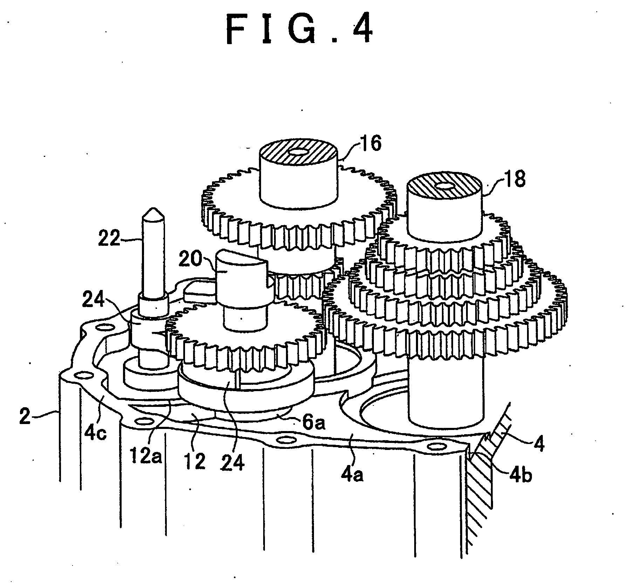

In this kind of transaxle case 2, the reverse shaft 20 is arranged in the shaft hole 6, the intake shaft 16 is arranged in the shaft hole 8, and the counter shaft hole 18 is arranged in the shaft hole 10, as shown in the plan view of FIG. 3 and the perspective view of FIG 4.

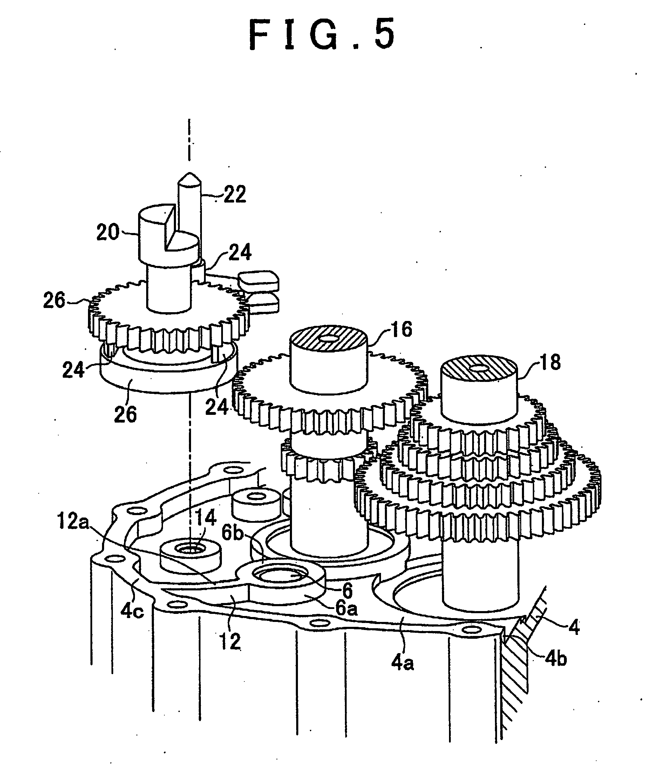

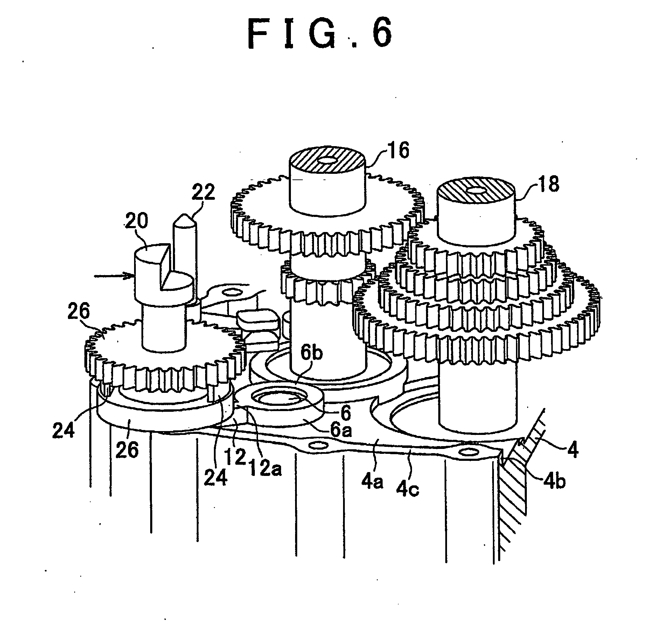

Of these, the intake shaft 16 and the counter shaft 18 are mounted to the partition wall 4 before the reverse shaft 20 is, as shown in FIG 5. Then the reverse shaft 20 is mounted together with the shift fork shaft 22. When mounting the reverse shaft 20 and the shift fork shaft 22 as a single unit, a reverse shaft fork 24 is first fit onto a reverse gear 26 that is supported by the reverse shaft 20, as shown in FIG. 5. In this way, the shift fork shaft 22 and the reverse shaft 20 are integrated together by the reverse shaft fork 24 and the reverse gear 26. Then, the shift fork shaft 22 is inserted into the shift shaft hole 14 while the reverse shaft 20 and the reverse gear 26 are rest on the top surface 4c of the stepped edge portion 4b, as is shown in FIG. 6. Initially resting the reverse shaft 20 and the reverse gear 26 on the top surface 4c keeps them from falling onto the surface of the partition wall 4 farther toward the inside than the top surface 4c.

Next, as shown by the arrow in FIG. 6, the unit of the reverse shaft 20 and the reverse gear 26 is rotated so that it revolves around the shift fork shaft 22, which is supported in the shift shaft hole 14, toward the reverse shaft hole 6 while sliding on the top surface 4c. The radius of the revolution trajectory is the same as the distance between the shift shaft hole 14 and the guide top surface 12a.

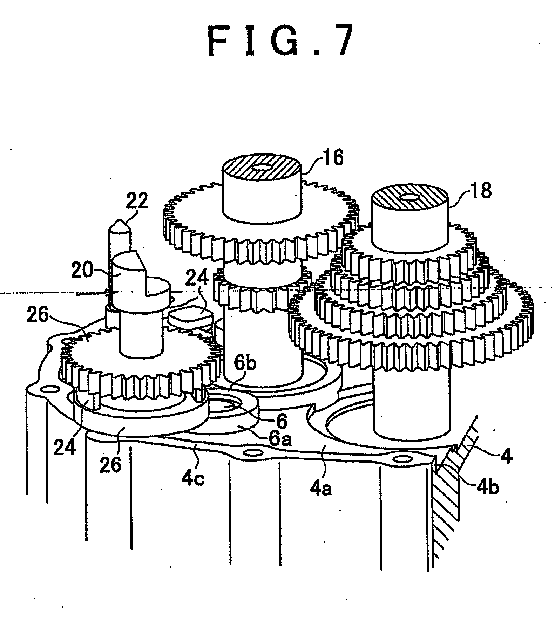

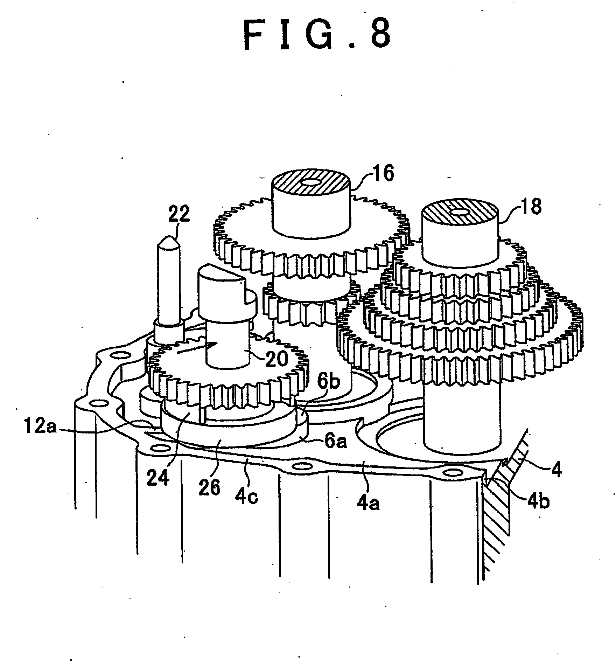

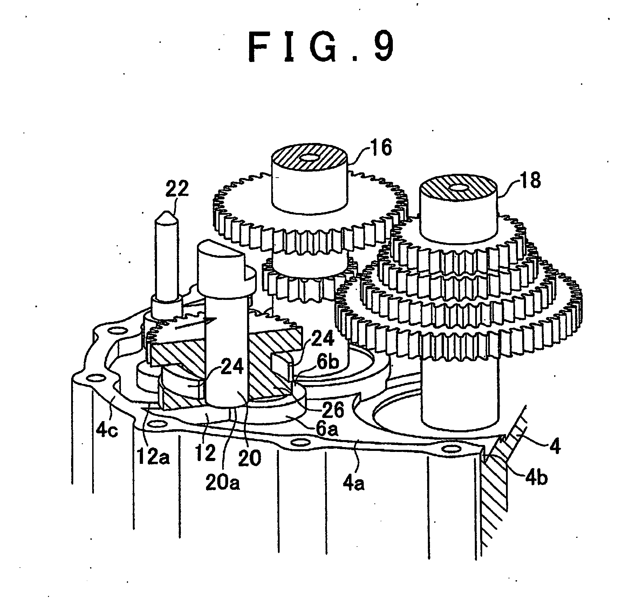

Therefore, the unit of the reverse shaft 20 and the reverse gear 26 slides toward the reverse shaft hole 6 on the guide top surface 12a, as shown in FIGS. 7 and 8, without falling down onto the surface 4a of the partition wall 4. Incidentally, FIG. 9 shows the reverse gear 26 in FIG. 8 cut away vertically. In this way, the reverse shaft 20 and the reverse gear 26 are both kept on the guide top surface 12a.

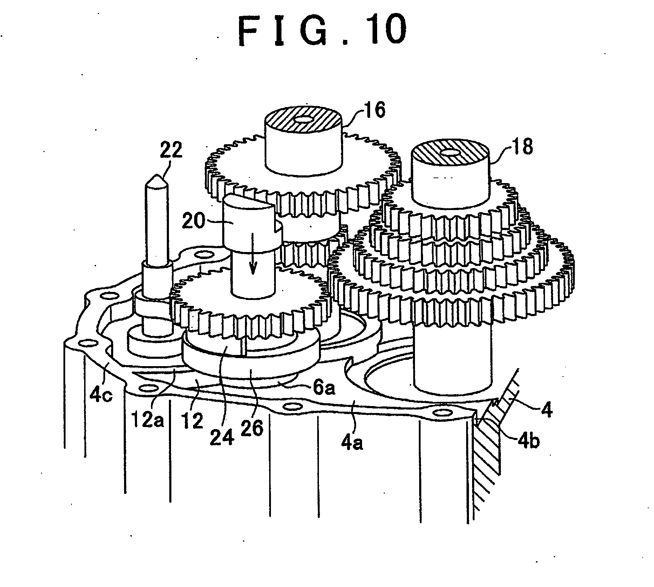

Also, when the reverse shaft 20 reaches the top surface 6b of the ring-shaped stepped portion 6a that surrounds the reverse shaft hole 6 and then comes to be positioned over the reverse shaft hole 6, the lower end of the reverse shaft 20 drops by itself into the reverse shaft hole 6 through the center of the reverse gear 26, as shown by the arrow in FIG. 10. As a result, the reverse shaft 20 is supported by being inserted into the reverse shaft hole 6.

The first example embodiment described above yields the following effects.
(a). The guide top surface 12a is present on the surface 4a of the partition wall 4 as a guide surface that guides the shaft end 20a of the reverse shaft 20 to the top surface 6b of the ring-shaped stepped portion 6a. Therefore, by moving the shaft end 20a of the reverse shaft 20 toward the reverse shaft hole 6 along the guide top surface 12a after resting it on the top surface 4c of the stepped edge portion 4b of the partition wall 4, the shaft end 20a is able to reach the top surface 6b of the ring-shaped stepped portion 6a easily without having to be lifted up. Also, the reverse shaft 20 is able to be supported in the reverse shaft hole by having the shaft end 20a of the reverse shaft 20 drop into the reverse shaft hole 6 on its own.

In this way, it is no longer necessary to lift the shaft end 20a of the reverse shaft 20 up off of the surface 4a of the partition wall 4 to insert it into the reverse shaft hole 6 that serves as the shaft end supporting portion when moving the unit of the reverse shaft 20 and the reverse gear 26 around the gears of the input shaft 16 and the counter shaft 18, so mountability of the reverse shaft 20 to the transaxle case 2 can be improved.

(b). In particular, the reverse shaft is mounted while sliding of the unit of the reverse shaft 20 and the reverse gear 26 to which the reverse shift fork 24 is mounted is restricted on the guide top surface 12a via the reverse shift fork 24, the end of the shift fork shaft 22 of which is supported by the shift shaft hole 14 that serves as the shift fork shaft end supporting portion.

Therefore, the movement of the reverse shaft 20 can be restricted by the reverse shift fork 24 on the guide top surface 12a, and thus can be more stably guided from the top surface 4c of the stepped edge portion 4b to the top surface 6b of the ring-shaped stepped portion 6b. Accordingly, the reverse shaft 20 is able to reach the top surface 6a of the ring-shaped stepped portion 6a and be inserted into the reverse shaft hole 6 with extreme ease and accuracy.

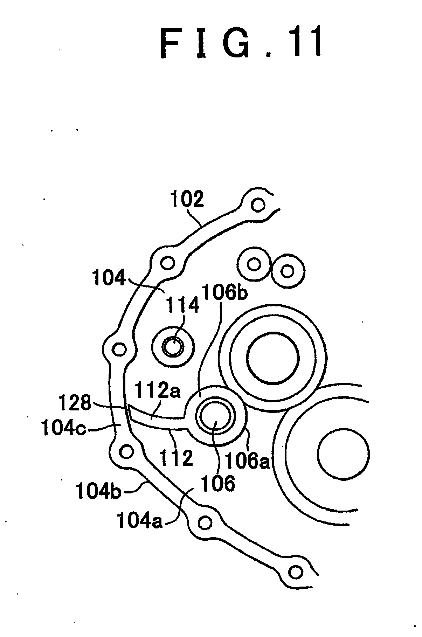

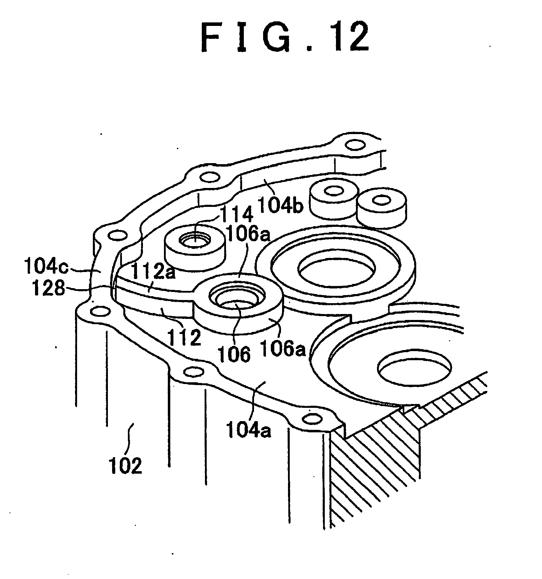

FIG. 11 is a plan view of the main structure of a partition wall 104 of a transaxle case 102 according to a second example embodiment of the invention, and FIG. 12 is a perspective view of the same. In this second example embodiment, there is a gap 128 between a guide portion 112 and a stepped edge portion 104, so the top surface 104c of the stepped edge portion 104b and the guide top surface 112a (functioning as the guide surface) of the guide portion 112 are not connected. Incidentally, in this case, the bottom of the gap 128 is on the same plane as the surface 104a of the partition wall 104.

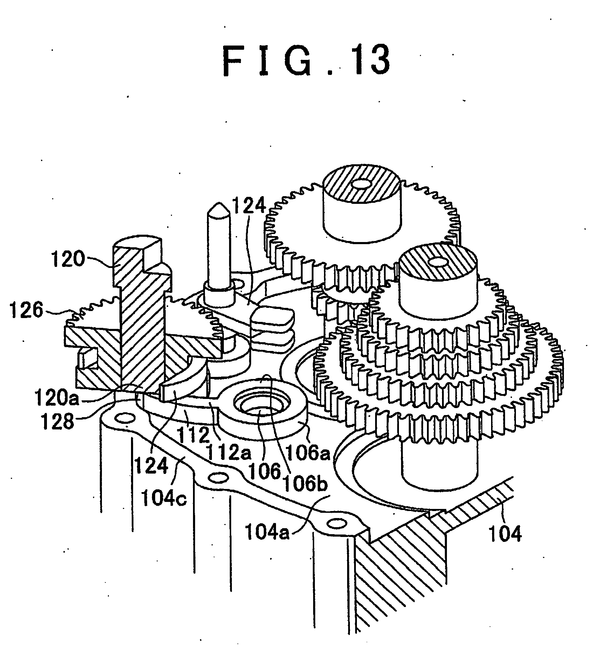

However, the width of the gap 128, i.e., the distance between the top surface 104c of the stepped edge portion 104b and the guide top surface 112a, is narrower than the diameter, i.e., the width, of the shaft end 120a of the reverse shaft 120, as shown in FIG. 13. Therefore, just as in the mounting operation of the first example embodiment described above, the shaft end 120a of the reverse shaft 120 can be moved to the guide top surface 112a of the guide portion 112 by being slid without falling into the gap 128, as shown in FIG 13, while the reverse shaft 120 which is supporting the reverse gear 126 is rested on the top surface 104c of the stepped edge portion 104b. Then, by sliding the shaft end 120a of the reverse shaft 120 farther, the reverse shaft 120 can be guided by the reverse shift fork 124 and the guide top surface 112a to the top surface 106b of the ring-shaped stepped portion 106a, and ultimately inserted into the reverse shaft hole 106 (functioning as the gear shaft end supporting portion).

The second example embodiment yields the following effects.
(a). The same effects as those obtained in the first example embodiment are able to be obtained.
(b). Liquid packing (FIPG) may be applied along the inner edge of the top surface 104c of the stepped edge portion 104b to provide a seal between the transaxle caste 102 and the transmission case. If the seal surfaces of the transaxle case 102 and the transmission case are pressure bonded together when liquid packing is applied in this way, the liquid packing will be squeezed out all around the periphery inside the transaxle case 102 and the transmission case and cover the pressure bonded surface to some extend from the inside, thereby creating a more complete seal. If this kind of liquid packing is used and the guide top surface 112a of the guide portion 112 is connected to the top surface 104c of the stepped edge portion 104b, the inward squeezed portion of the liquid packing will be formed in a discontinuous manner, which is undesirable for sealability.

In this example embodiment, providing the gap 128 minimizes the possibility of sealability being impaired if liquid packing is used.

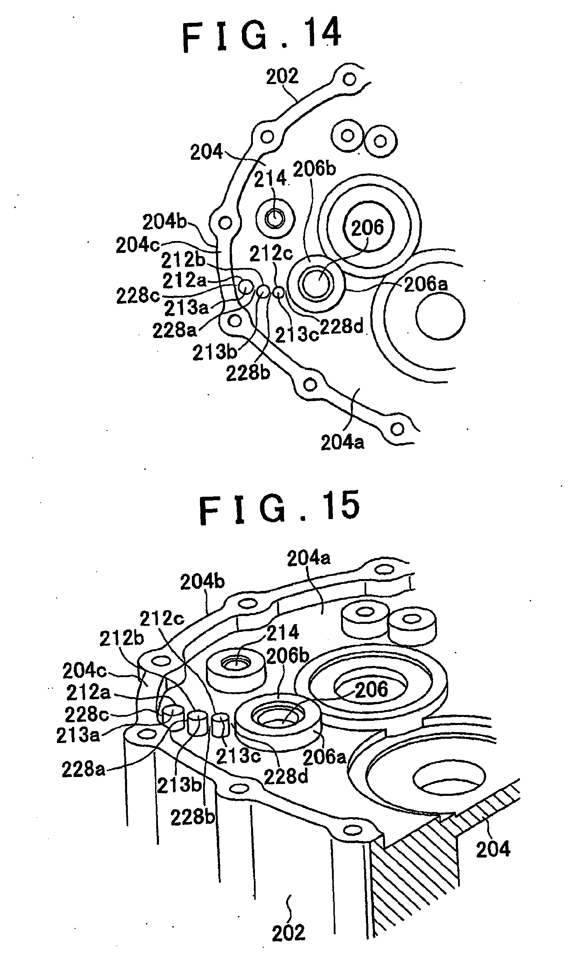

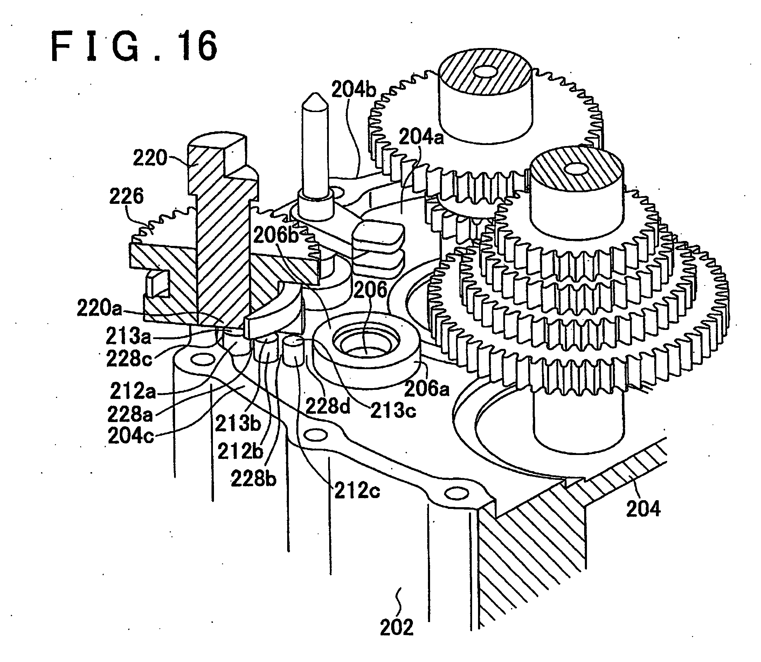

FIG 14 is a plan view of the main structure of a partition wall 204 of a transaxle case 202 according to a third example embodiment of the invention, and FIG. 15 is a perspective view of the same. In this third example embodiment, the guide portion is formed not of one continuous guide portion, but of a plurality (in this case three) of separate guide portions 212a, 212b, and 212c. These guide portions 212a, 212b, and 212c (functioning as the guide surfaces) are arranged in an arc shape centered around the shift shaft hole 214. The widths of the gaps 228a, 228b, the gap 228c between the top surface 204c of the stepped edge portion 204b and the top surface 213a of the guide portion 212a, and the gap 228d between the top surface 213c of the guide portion 212c and the top surface 206b of the ring-shaped stepped portion 206a, i.e., the distances between adjacent top surfaces (that is, the distance between the top surface 204c and the adjacent guide top surface 213a, the distance between the guide top surface 213a and the adjacent guide top surface 213b, the distance between the guide top surface 213b and the adjacent guide top surface 213c, and the distance between the guide top surface 213c and the adjacent top surface 206b), are each less than the diameter of the shaft end 220a of the reverse shaft 220, as shown in FIG. 16.

Therefore, just as in the mounting operation of the second example embodiment, in the third example embodiment as well, the reverse shaft 220 that supports the reverse gear 226 is first rested on the top surface 204c. Then, as shown in FIG. 16, the shaft end 220a of the reverse shaft 220 is slid toward the top surface 206b of the ring-shaped stepped portion 206a. As it is slid, the reverse shaft 220 slides sequentially to the guide top surface 213a of the guide portion 212a, to the guide top surface 213b of the guide portion 212b, and to the guide top surface 213c of the guide portion 212c, without falling into the gaps 228c, 228a, 228b, or 228d, until it finally reaches the top surface 206b of the ring-shaped stepped portion 206a, from which it is then able to be inserted into the reverse shaft hole 206 (which functions as the gear shaft end supporting portion).

The third example embodiment yields the following effects.
(a). The same effects as those obtained in the second example embodiment are able to be obtained.
(b). Providing multiple gaps 228a, 228b, 228c, and 228d enables each of the guide portions 212a, 212b, 212c to be smaller, thereby reducing the amount of added weight to the transaxle case 202 of the example embodiment.

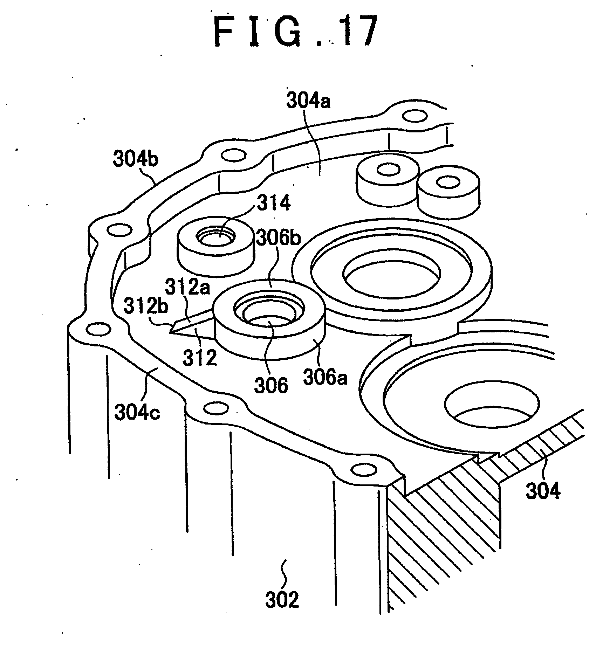

FIG. 17 is a perspective view of the main structure of a partition wall 304 of a transaxle case 302 according to a fourth example embodiment of the invention. In this example embodiment, a guide portion 312 forms an inclined guide surface 312a (which functions as the guide surface) which gradually increases in height from a position lower than the top surface 306b of the ring-shaped stepped portion 306a, i.e., in this case, from the surface 304a of the partition wall 304, to the height of the top surface 306b of the ring-shaped stepped portion 306a. This inclined guide surface 312a is formed in an arc shape centered around the shift shaft hole 314 in the length direction.

Therefore, the reverse shaft 320 that is supporting the reverse gear 326 is rested on the surface 304a of the partition wall 304, instead of on the top surface 304c of the stepped edge portion 304b. When the shaft end 320a of the reverse shaft 320 is then slid to the tip end portion 312b of the guide portion 312, it starts to rise from the inclined guide surface 312a and eventually reaches the top surface 306b of the ring-shaped stepped portion 306a. In this way, the reverse shaft 320 is able to be inserted into the reverse shaft hole 306 (which functions as the gear shaft end supporting portion).

The fourth example embodiment yields the following effects.
(a). Even if the stepped edge portion 304b and the guide portion 312 are distanced from one another such that the width is greater than the diameter of the shaft end 320a of the reverse shaft 320, the shaft end 320a of the reverse shaft 320 is able to be slidably guided along the top surface 304a of the partition wall 304 and the inclined guide surface 312a to the top surface 306b of the ring-shaped stepped portion 306a and inserted into the reverse shaft hole 306.

Therefore, it is no longer necessary to lift the shaft end 320a of the reverse shaft 320 up off of the surface 304a of the partition wall 304 to insert it into the reverse shaft hole 306 that serves as the shaft end supporting portion, so mountability of the reverse shaft 320 to the transaxle case 302 can be improved.

(b). The same effects as those obtained in (b) of the first example embodiment, as well as those obtained in (b) of the second example embodiment can be obtained.
(c). The amount material needed for the guide portion 312 is reduced by an amount corresponding to the incline of the inclined guide surface 312a, which in turns reduces the amount of added weight to the transaxle case 302.

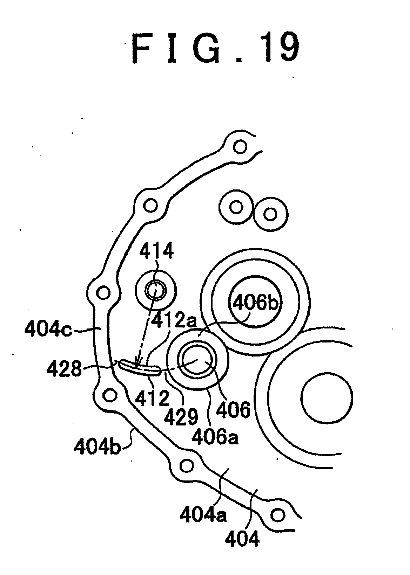

FIG. 19 shows another example embodiment. When a guide portion 412 is formed as a single continuous guide portion, a gap 428 may be provided between the guide portion 412 and a stepped edge portion 404b, and a gap 429 may be provided between the guide portion 412 and a ring-shaped stepped portion 406a. Both of these gaps 428 and 429 are formed smaller than the width of the shaft end of the reverse shaft. Incidentally, in FIG. 19, the shape of the guide top surface 412a of the guide portion 412 is arc-shaped centered around a shift shaft hole 414, such that the radius of the arc is equal to the length from the guide top surface 412a to the center of the reverse shaft hole 406, as shown by the alternate long and short dash line.

With this structure, it is no longer necessary to lift the shaft end of the reverse shaft up off of the surface 404a of the partition wall 404 by sliding the reverse shaft from the top surface 404c of the stepped edge portion 404b to the top surface 406b of the ring-shaped stepped portion 406a via the guide top surface 412a of the guide portion 412, so mountability of the reverse shaft to the transaxle case can be improved.

In the example embodiments described above, the shaft holes may be formed as non through-holes that have a bottom or as through-holes which support the shaft in a corresponding axial position.
Also, in the example embodiment described above, the reverse shaft is guided around the shift shaft hole using the reverse shift fork. Alternatively, however, the reverse shaft supporting the reverse gear may be brought to the top surface of the ring-shaped stepped portion and inserted into the reverse shaft hole by being guided by the guide surface without using the reverse shift fork, and then the reverse shift fork may be attached to the reverse gear and the shift shaft hole. That is, the reverse shaft may be inserted into the reverse shaft hole by being guided by only the guide surfaces.
A guide top surface 12a that guides a shaft end of a reverse shaft 20 to a top surface 6b of a ring-shaped stepped portion 6a is provided on a surface 4a of the partition wall 4. Therefore, the shaft end of the reverse shaft 20 slides while being guided on its own on the guide surface 12a by first being rested on a top surface 4c of a stepped edge portion 4b and then being moved in the direction of a reverse shaft hole 6. Accordingly, the shaft end of the reverse shaft 20 reaches the top surface 6b of the ring-shaped stepped portion 6a easily without having to be lifted up. Also, the reverse shaft 20 is inserted and supported in the reverse shaft hole 6 by having the shaft end of the reverse shaft 20 drop into the reverse shaft hole 6.

## Claims

1. A gear case in which a gear shaft end supporting portion (6, 106, 206, 306, 406) that is surrounded by a ring-shaped stepped portion (6a, 106a, 206a, 306a, 406a) is formed in a surface of a partition wall (4, 104, 204, 304, 404) such that the gear shaft end supporting portion supports a gear shaft, comprising:
a guide surface (12a, 112a, 213a/213b/213c, 312a, 412a) formed on the surface of the partition wall, **characterized in that**
the guide surface guides an end of the gear shaft to a top surface (6b, 106b, 206b, 306b, 406b) of the ring-shaped stepped portion, and
is formed along an arc centered around a supporting portion that supports an end of a shaft (22) of a shift fork (24) which shifts the gear in an axial direction.

2. The gear case according to claim 1, wherein a stepped edge portion (4b, 104b, 204b, 304b, 404b) is formed on the outer periphery of the partition wall, and a top surface (4c, 104c, 204c, 304c, 404c) of the stepped edge portion and the top surface of the ring-shaped stepped portion are connected by the guide surface.

3. The gear case according to claim 2, wherein a gap that has a width narrower than the width of the end of the gear shaft is formed between the stepped edge portion (104b, 204b, 304b, 404b) and the guide surface (112a, 213a/213b/213c, 312a, 412a).

4. The gear case according to claim 1, wherein a stepped edge portion (204b) is formed on the outer periphery of the partition wall; a plurality of guide surfaces (213a/213b/213c) are formed on the surface of the partition wall between a top surface (204c) of the stepped edge portion and the top surface (206b) of the ring-shaped stepped portion; and a gap (228a, 228b) between the plurality of guide portions that are adjacent to one another, or a gap (228c) between the guide surface and the stepped edge portion, or a gap (228d) between the guide surface and the ring-shaped stepped portion, is narrower than the width (220a) of the end of the gear shaft.

5. The gear case according to any one of claims 1 to 4, wherein the height of the guide surface from the partition wall at the point closest to the stepped edge portion is substantially equal to the height of the stepped edge portion.

6. The gear case according to claim 1, wherein the guide surface (312a) guides the shaft end (320a) of the gear shaft from a position lower than the top surface (306b) of the ring-shaped stepped portion to the top surface of the ring-shaped stepped portion by gradually rising from the surface of the partition wall.

7. The gear case according to any one of claims 1 to 6, wherein the gear case is a gear case of a transmission.

8. The gear case according to any one of claims 1 to 7, wherein the gear shaft is a gear shaft of a reverse idler gear.

9. The gear case according to any one of claims 1 to 8, wherein the height of the guide surface from the partition wall at the point closest to the ring-shaped stepped portion is substantially equal to the height of the top surface of the ring-shaped stepped portion.

10. A gear shaft mounting method for mounting the gear shaft to the gear case according to any one of claims 1 to 9, **characterized by** comprising:
guiding the end of the gear shaft supporting the gear to the top surface of the ring-shaped stepped portion while sliding the end of the gear shaft on the guide surface of the gear case, and inserting the shaft end into the gear shaft end supporting portion.

11. A gear shaft mounting method for mounting the gear shaft to the gear case according to claim 1, **characterized by** comprising:
supporting the shift fork attached to the gear supported on the gear shaft by the shift fork shaft end supporting portion of the gear case; and
guiding the end of the gear shaft to the top surface of the ring-shaped stepped portion by both the shift fork and the arc-shaped guide surface, and inserting the shaft end into the gear shaft end supporting portion.

12. The gear shaft mounting method according to claim 10 or 11, wherein the end of the gear shaft supporting the gear is first rested on a stepped edge portion of the partition wall and then slid toward the guide surface on the partition wall and guided on the guide surface.

13. The gear shaft mounting method according to any one of claims 10 to 12, wherein the gear shaft is mounted after another gear shaft has already been mounted in the gear case.

## Patentansprüche

1. Getriebegehäuse, in dem ein Zahnradwellenendstützabschnitt (6, 106, 206, 306, 406), der von einem ringförmig abgestuften Abschnitt (6a, 106a, 206a, 306a, 406a) umgeben ist, in einer Fläche einer Trennwand (4, 104, 204, 304, 404) so ausgebildet ist, dass der Zahnradwellenendstützabschnitt eine Zahnradwelle stützt, das aufweist:
eine Führungsfläche (12a, 112a, 213a/213b/213c, 312a, 412a), die auf der Fläche der Trennwand ausgebildet ist, **dadurch gekennzeichnet, dass**
die Führungsfläche ein Ende der Zahnradwelle zu einer Oberfläche (6b, 106b, 206b, 306b, 406b) des ringförmig abgestuften Abschnitts führt, und
entlang eines Bogens ausgebildet ist, der um einen Stützabschnitt zentriert ist, der ein Ende einer Welle (22) einer Schaltgabel (24) stützt, die das Zahnrad in eine axiale Richtung schaltet.

2. Getriebegehäuse nach Anspruch 1, wobei ein abgestufter Kantenabschnitt (4b, 104b, 204b, 304b, 404b) auf dem äußeren Umfang der Trennwand ausgebildet ist, und wobei eine Oberfläche (4c, 104c, 204c, 304c, 404c) des abgestuften Kantenabschnitts und die Oberfläche des ringförmig abgestuften Abschnitts durch die Führungsfläche miteinander verbunden sind.

3. Getriebegehäuse nach Anspruch 2, wobei ein Spalt, der eine schmalere Breite hat als die Breite des Endes der Zahnradwelle, zwischen dem abgestuften Kantenabschnitt (104b, 204b, 304b, 404b) und der Führungsfläche (112a, 213a/213b/213c, 312a, 412a) ausgebildet ist.

4. Getriebegehäuse nach Anspruch 1, wobei ein abgestufter Kantenabschnitt (204b) auf dem äußeren Umfang der Trennwand ausgebildet ist; eine Vielzahl von Führungsflächen (213a/213b/213c) auf der Fläche der Trennwand zwischen einer Oberfläche (204c) des abgestuften Kantenabschnitts und der Oberfläche (206b) des ringförmig abgestuften Abschnitts ist; und ein Spalt (228a, 228b) zwischen der Vielzahl von Führungsflächen, die zueinander benachbart sind, oder ein Spalt (228c) zwischen der Führungsfläche und dem abgestuften Kantenabschnitt, oder ein Spalt (228d) zwischen der Führungsfläche und dem ringförmig abgestuften Abschnitt, schmaler ist als die Breite (220a) des Endes der Zahnradwelle.

5. Getriebegehäuse nach einem der Ansprüche 1 bis 4, wobei die Höhe der Führungsfläche von der Trennwand an dem zu dem abgestuften Kantenabschnitt nächsten Punkt im Wesentlichen gleich der Höhe des abgestuften Kantenabschnitts ist.

6. Getriebegehäuse nach Anspruch 1, wobei die Führungsfläche (312a) das Wellenende (320a) der Zahnradwelle von einer gegenüber der Oberfläche (306b) des ringförmig abgestuften Abschnitts niedrigeren Position zu der Oberfläche des ringförmig abgestuften Abschnitts durch allmähliches Erheben von der Fläche der Trennwand führt.

7. Getriebegehäuse nach einem der Ansprüche 1 bis 6, wobei das Getriebegehäuse ein Getriebegehäuse eines Getriebes ist.

8. Getriebegehäuse nach einem der Ansprüche 1 bis 7, wobei die Zahnradwelle eine Zahnradwelle eines Rücklaufrads ist.

9. Getriebegehäuse nach einem der Ansprüche 1 bis 8, wobei die Höhe der Führungsfläche von der Trennwand an dem zu dem ringförmig abgestuften Abschnitt nächsten Punkt im Wesentlichen gleich der Höhe der Oberfläche des ringförmig abgestuften Abschnitts ist.

10. Zahnradwellenanbringverfahren zum Anbringen der Zahnradwelle an das Getriebegehäuse nach einem der Ansprüche 1 bis 9, **gekennzeichnet durch** die folgenden Schritte:
Führen des Endes der das Zahnrad stützenden Zahnradwelle zu der Oberfläche des ringförmig abgestuften Abschnitts während das Ende der Zahnradwelle auf der Führungsfläche des Getriebegehäuses gleitet, und Einführen des Wellenendes in den Zahnradwellenendstützabschnitt.

11. Zahnradwellenanbringverfahren zum Anbringen der Zahnradwelle an das Getriebegehäuse nach Anspruch 1, **gekennzeichnet durch** die folgenden Schritte:
Stützen der Schaltgabel, die an dem Zahnrad angebracht ist, das von der Zahnradwelle gestützt wird, **durch** den Schaltgabelwellenendstützabschnitt des Getriebegehäuses; und
Führen des Endes der Zahnradwelle zu der Oberfläche des ringförmig abgestuften Abschnitts **durch** sowohl die Schaltgabel als auch die bogenförmige Führungsfläche, und Einführen des Wellenendes in den Zahnradwellenendstützabschnitt.

12. Zahnradwellenanbringverfahren nach Anspruch 10 oder 11, wobei das Ende der Zahnradwelle, das das Zahnrad stützt, zuerst auf einem abgestuften Kantenabschnitt der Trennwand ruht und dann zu der Führungsfläche auf die Trennwand geschoben wird und auf der Führungsfläche geführt wird.

13. Zahnradwellenanbringverfahren nach einem der Ansprüche 10 bis 12, wobei die Zahnradwelle montiert wird nachdem eine andere Zahnradwelle bereits in dem Getriebegehäuse montiert ist.

## Revendications

1. Carter d'engrenage dans lequel une partie de support d'une extrémité d'un arbre de transmission (6, 106, 206, 306, 406) qui est entourée par une partie étagée en forme d'anneau (6a, 106a, 206a, 306a, 406a) est formée en surface d'une paroi de séparation (4, 104, 204, 304, 404) de sorte que la partie de support de l'extrémité de l'arbre de transmission supporte un arbre de transmission, comprenant :
une surface de guidage (12a, 112a, 213a/213b/213c, 312a, 412a) formée sur la surface de la paroi de séparation, **caractérisé en ce que**
la surface de guidage guide une extrémité de l'arbre de transmission vers une surface supérieure (6b, 106b, 206b, 306b, 406b) de la partie étagée en forme d'anneau, et
est formée le long d'un arc centré autour d'une partie de support qui supporte une extrémité d'un arbre (22) d'une fourchette de boîte (24) qui déplace l'engrenage dans une direction axiale.

2. Carter d'engrenage selon la revendication 1, dans lequel une partie de bord étagée (4b, 104b, 204b, 304b, 404b) est formée sur la périphérie externe de la paroi de séparation, et une surface supérieure (4c, 104c, 204c, 304c, 404C) de la partie de bord étagée et la surface supérieure de la partie étagée en forme d'anneau sont reliées par la surface de guidage.

3. Carter d'engrenage selon la revendication 2, dans lequel un écart qui a une largeur plus étroite que la largeur de l'extrémité de l'arbre de transmission est formé entre la partie de bord étagée (104b, 204b, 304b, 404b) et la surface de guidage (112a, 213a/213b/213c, 312a, 412a).

4. Carter d'engrenage selon la revendication 1, dans lequel une partie de bord étagée (204b) est formée sur la périphérie externe de la paroi de séparation ; une pluralité de surfaces de guidage (213a/213b/213c) sont formées sur la surface de la paroi de séparation entre une surface supérieure (204c) de la partie de bord étagée et la surface supérieure (206b) de la partie étagée en forme d'anneau ; et un écart (228a, 228b) entre la pluralité de parties de guidage qui sont adjacentes les unes aux autres, ou un écart (228c) entre la surface de guidage et la partie de bord étagée, ou un écart (228d) entre la surface de guidage et la partie étagée en forme d'anneau, est plus étroit que la largeur (220a) de l'extrémité de l'arbre de transmission.

5. Carter d'engrenage selon l'une quelconque des revendications 1 à 4, dans lequel la hauteur de la surface de guidage de la paroi de séparation à l'endroit le plus proche de la partie de bord étagée est essentiellement égale à la hauteur de la partie de bord étagée.

6. Carter d'engrenage selon la revendication 1, dans lequel la surface de guidage (312a) guide l'extrémité d'arbre (320a) de l'arbre de transmission d'une position inférieure à la surface supérieure (306b) de la partie étagée en forme d'anneau à la surface supérieure de la partie étagée en forme d'anneau en augmentant progressivement de la surface de la paroi de séparation.

7. Carter d'engrenage selon l'une quelconque des revendications 1 à 6, dans lequel le carter d'engrenage est un carter d'engrenage d'une transmission.

8. Carter d'engrenage selon l'une quelconque des revendications 1 à 7, dans lequel l'arbre de transmission est un arbre de transmission d'un pignon intermédiaire de marche arrière.

9. Carter d'engrenage selon l'une quelconque des revendications 1 à 8, dans lequel la hauteur de la surface de guidage de la paroi de séparation à l'endroit le plus proche de la partie étagée en forme d'anneau est essentiellement égale à la hauteur de la surface supérieure de la partie étagée en forme d'anneau.

10. Procédé de montage d'un arbre de transmission pour monter l'arbre de transmission sur le carter d'engrenage selon l'une quelconque des revendications 1 à 9, **caractérisé en ce qu'**il comprend le fait :
de guider l'extrémité de l'arbre de transmission supportant l'engrenage vers la surface supérieure de la partie étagée en forme d'anneau, tout en faisant glisser l'extrémité de l'arbre de transmission sur la surface de guidage du carter d'engrenage, et en insérant l'extrémité d'arbre dans la partie de support de l'extrémité de l'arbre de transmission.

11. Procédé de montage d'un arbre de transmission pour monter l'arbre de transmission sur le carter d'engrenage selon la revendication 1, **caractérisé en ce qu'**il comprend le fait :
de supporter la fourchette de boîte fixée à l'engrenage supporté sur l'arbre de transmission par la partie de support de l'extrémité d'arbre de la fourchette de boîte du carter d'engrenage ; et
de guider l'extrémité de l'arbre de transmission vers la surface supérieure de la partie étagée en forme d'anneau par la fourchette de boîte et la surface de guidage en forme d'arc, et d'insérer l'extrémité d'arbre dans la partie de support de l'extrémité de l'arbre de transmission.

12. Procédé de montage d'un arbre de transmission selon la revendication 10 ou 11, dans lequel l'extrémité de l'arbre de transmission supportant l'engrenage est d'abord reposée sur une partie de bord étagée de la paroi de séparation et glisse ensuite vers la surface de guidage sur la paroi de séparation et est guidée sur la surface de guidage.

13. Procédé de montage d'un arbre de transmission selon l'une quelconque des revendications 10 à 12, dans lequel l'arbre de transmission est monté après qu'un autre arbre de transmission a déjà été monté dans le carter d'engrenage.
